# EUROPEAN PATENT APPLICATION

(11) **EP 4 804 703 A1**
(43) Date of publication of application: **09.09.2026**
(21) Application number: 23957174.8
(22) Date of filing: 31.10.2023
(51) Int. Cl.: H04W 74/08

(54) **CHANNEL ACCESS METHODS AND APPARATUSES, AND COMMUNICATION DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN)
(74) Representative: Novagraaf Technologies
(86) International application number: PCT/CN2023/128831
(87) International publication number: WO 2025/091297

(57) **Abstract**

Channel access methods and apparatuses, and a communication device and a storage medium, which belong to the technical field of wireless communications. A channel access method is executed by a station device, the station device being a zero-power-consumption device. The method comprises: performing channel access in an unlicensed spectrum by means of a first access category (501), wherein the first access category is one of at least one second access category corresponding to a zero-power-consumption device.

## Description

### TECHNICAL FIELD

The present disclosure relates to the field of wireless communication technologies, and in particular, to methods and apparatuses for channel access, a communication device, and a storage medium.

### RELATED ART

In a wireless local area network (WLAN), communication device may access channels in an unlicensed spectrum to acquire transmission opportunities (TXOPs).

In related technologies, for example, the communication devices in the WLAN are allowed to access channels using a channel access protocol based on a carrier sense multiple access with collision avoidance (CSMA/CA) mechanism.

### SUMMARY

Embodiments of the present disclosure provide methods and apparatuses for channel access, a communication device, and a storage medium. The technical solutions are as follows.

In one aspect, some embodiments of the present disclosure provide a method for channel access. The method is performed by a station device that is a zero-power device, and includes:
performing channel access in an unlicensed spectrum based on a first access category, wherein the first access category is one of at least one second access category corresponding to the zero-power device.

In another aspect, some embodiments of the present disclosure provide a method for channel access. The method is performed by an access point (AP) device, and includes:
configuring a first access category for a station device via a first configuration frame, such that the station device performs channel access in an unlicensed spectrum based on the first access category, wherein the station device is a zero-power device, and the first access category is one of at least one second access category corresponding to the zero-power device.

In another aspect, some embodiments of the present disclosure provide an apparatus for channel access. The apparatus includes:
a channel access module, configured for a station device to perform channel access in an unlicensed spectrum based on a first access category, wherein the first access category is one of at least one second access category corresponding to a zero-power device, and the station device is the zero-power device.

In another aspect, some embodiments of the present disclosure provide an apparatus for channel access. The apparatus includes:
a configuring module, adapted to configure a first access category for a station device via a first configuration frame, such that the station device performs channel access in an unlicensed spectrum based on the first access category, wherein the station device is a zero-power device, and the first access category is one of at least one second access category corresponding to the zero-power device.

In another aspect, some embodiments of the present disclosure provide a communication device. The communication device includes a processor, a memory, and a transceiver; wherein the memory stores one or more computer programs, which when loaded and run by the processor, cause the communication device to perform the method for channel access described above.

In another aspect, some embodiments of the present disclosure provide a computer-readable storage medium. The computer-readable storage medium stores one or more computer programs, which when loaded and run by a processor, cause the processor to perform the method for channel access described above.

In another aspect, some embodiments of the present disclosure provide a computer program product. The computer program product includes one or more computer instructions, wherein the one or more computer instructions are stored on a computer-readable storage medium; and a processor of a communication device reads the one or more computer instructions from the computer-readable storage medium and executes the one or more computer instructions to cause the communication device to perform the method for channel access described above.

In another aspect, some embodiments of the present disclosure provide a chip. The chip includes programmable logic circuitry and/or one or more program instructions, and the chip, when running in a communication device, causes the communication device to perform the method for channel access described above.

In another aspect, some embodiments of the present disclosure provide a computer program. The computer program, when loading and run by the processor of a communication device, causes the communication device to perform the method for channel access described above.

The technical solutions according to the embodiments of the present disclosure achieve the following beneficial effects.

The station device, as a zero-power device, performs channel access in an unlicensed spectrum based on one of at least one second access category specifically configured for the zero-power device. That is, in the above solutions, an appropriate AC is configured for the zero-power device, such that the channel access of the station device as a zero-power device satisfies the transmission requirement of the zero-power device, thereby reducing interference and collision between the zero-power device and the non-zero power device, and improving the system performance.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a network architecture of a communication system according to some embodiments of the present disclosure;
FIG. 2 is a schematic diagram of a structure of a physical layer protocol data unit (PPDU) according to the present disclosure;
FIG. 3 is a schematic diagram of a frame format of a medium access control (MAC) frame according to the present disclosure;
FIG. 4 is a schematic diagram of enhanced distributed channel access (EDCA) parameters according to the present disclosure;
FIG. 5 is a flowchart illustrating a method for channel access according to some embodiments of the present disclosure;
FIG. 6 is a flowchart illustrating a method for channel access according to some embodiments of the present disclosure;
FIG. 7 is a flowchart illustrating a method for channel access according to some embodiments of the present disclosure;
FIG. 8 is a schematic diagram of elements of EDCA parameters of an access category (AC) corresponding to an ambient powered (AMP) station (STA) indicated by an AP;
FIG. 9 is a format of elements of EDCA parameters configured by an AP;
FIG. 10 is a block diagram of an apparatus for channel access according to some embodiments of the present disclosure;
FIG. 11 is a block diagram of an apparatus for channel access according to some embodiments of the present disclosure; and
FIG. 12 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and business scenarios described in the embodiments of the present disclosure are intended to describe the technical solutions according to the embodiments of the present disclosure more clearly, but do not constitute any limitation on the technical solutions. Those of ordinary skill in the art recognize that, with the evolution of the network architecture and the emergence of new service scenarios, the technical solutions according to the embodiments of the present disclosure are also applicable to addressing similar technical problems.

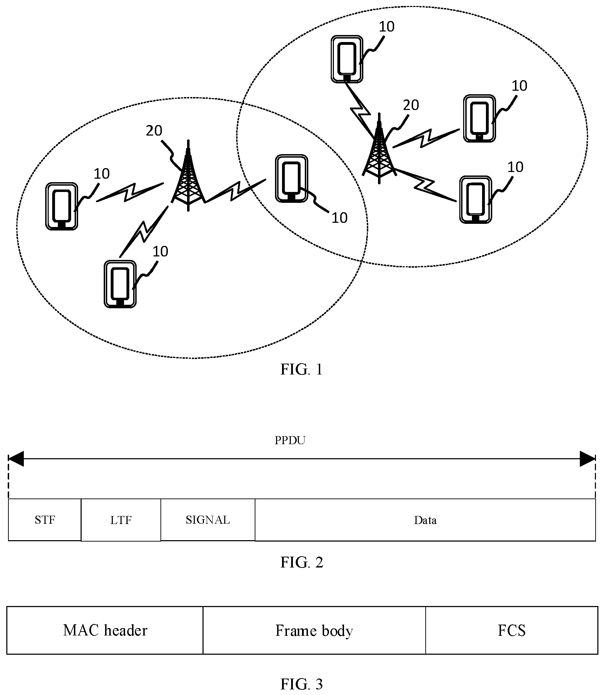

Referring to FIG. 1, which is a schematic diagram of a network architecture of a communication system according to some embodiments of the present disclosure, the network architecture involves an STA 10 and an AP 20.

Generally, a plurality of STAs 10 are deployed, and each AP 20 is associated with one or more STAs 10. The STA 10 may include various wireless communication-enabled devices including: zero-power devices, sensor devices, handheld devices, in-vehicle devices, wearable devices, computing devices, other processing devices connected to a radio modem, as well as various forms of user equipment (UE), mobile stations (MSs), terminal devices, and the like. For ease of description, in the embodiments of the present disclosure, the devices are collectively referred to as the STA.

The AP 20 is a device deployed in the access network to provide wireless communication capabilities for the STA 10, and is also referred to as an access point. The AP 20 may include various types of wireless routers, wireless switches, or wireless relay devices, and the like.

The STA 10 and/or the AP 20 may be multi-link devices.

Optionally, the network architecture may further involve other network devices, such as a gateway device, and the like, which are not illustrated in FIG. 1.

The STA 10 is associated with and communicates with the AP 20 using the WLAN technology, for example, using the IEEE 802.11 standards.

The IEEE 802.11 bf Task Group is currently discussing the formulation of protocols to specify how to use WLAN signals compliant with the IEEE 802.11 standards to achieve WLAN sensing. WLAN terminals participating in sensing may assume roles such as a sensing session initiator, a sensing session responder, a sensing signal transmitter, a sensing signal receiver, and the like.

A WLAN sensing session includes one or more of the following phases: session setup, sensing measurement, sensing report, and session termination. A WLAN terminal may assume one or more roles in the sensing session. For example, the sensing session initiator may solely serve as a sensing session initiator, or may serve as a sensing signal transmitter, or may serve as a sensing signal receiver, or may serve as both a sensing signal transmitter and a sensing signal receiver.

Before introduction of the technical solutions according to the present disclosure, some technical knowledge involved in the present disclosure is first described.

### I. Zero-Power Devices

The zero-power devices are classified into passive zero-power devices, semi-passive zero-power devices, and active zero-power device based on energy sources and usage modes of the zero-power devices:

### 1) Passive zero-power devices

A zero-power device requires no built-in battery. In a case where the zero-power device is in proximity to a network device (e.g., a reader/writer in a radio frequency identification (RFID) system), the zero-power device is within a near-field range formed by antenna radiation from the network device. Therefore, an antenna of the zero-power device generates an induced current by electromagnetic induction, and the induced current drives a low-power chip circuit of the zero-power device to implement demodulation of forward link signals and modulation of backward link signals. For a backscatter link, the zero-power device transmits the signals by backscattering.

Therefore, the passive zero-power device does not need the built-in battery to drive either for the forward link or the reverse link, and thus is a zero-power device in the true sense.

The passive zero-power device requires no battery, and the radio frequency (RF) circuit and the baseband circuit of the passive zero-power device are very simple. For example, components such as a low-noise amplifier (LNA), a power amplifier (PA), a crystal oscillator, and an analog-to-digital converter (ADC) are not required, and thus the passive zero-power device has many advantages such as small size, light weight, very low cost, and long service life.

### 2) Semi-passive zero-power devices

A semi-passive zero-power device is not equipped with any conventional battery, but harvests radio wave energy via an RF energy harvesting module and simultaneously stores the harvested energy in an energy storage unit (e.g., a capacitor). Upon acquisition of the energy, the energy storage unit drives a low-power chip circuit of the zero-power device to implement demodulation of forward link signals and modulation of backward link signals. For a backscatter link, the zero-power device transmits the signals by backscattering.

Therefore, the semi-passive zero-power device requires no built-in battery to drive either for the forward link or the backward link. Although the semi-passive zero-power device uses the energy stored in the capacitor during operation, the energy originates from the radio energy harvested via the energy harvesting module, and thus is also a zero-power device in the true sense.

The semi-passive zero-power device inherits advantages of the passive zero-power device, such as small size, light weight, very low cost, and long service life.

### 3) Active zero-power devices

The zero-power device used in some scenarios may also be an active zero-power device, and such a terminal may be equipped with a built-in battery. The battery is configured to drive a low-power chip circuit of the zero-power device to implement demodulation of forward links signal and modulation of backward link signals are implemented. However, for a backscatter link, the zero-power device transmits the signals by backscattering. Therefore, the "zero power" characteristic of such terminals is mainly manifested in the fact that signal transmission on the backward link does not consume the power of the terminal but uses the backscattering.

The active zero-power device is powered by a built-in battery to increase a communication distance of the zero-power device and improve communication reliability. Therefore, the zero-power device finds application in scenarios where relatively stringent requirements are imposed for aspects such as communication distance and read latency.

### II. Cellular Passive Internet of Things (IoT)

With the growth of 5G industry applications, the variety of connected objects and application scenarios are increasing, which in turn imposes more stringent requirements on the cost and power consumption of communication terminals. The application of battery-free, low-cost passive IoT devices has become a key technology for cellular IoT. This enriches the types and quantity of terminals connected to the 5G network, truly enabling the Internet of everything. The passive IoT devices are based on and extended from the existing zero-power devices to be adapted for cellular IoT.

### III. Environment-Energy-based Devices

In new radio (NR) systems and Wi-Fi systems, the battery-free and low-cost nature of devices support the low-cost mass deployment and maintenance-free operation of, for example, IoT devices. Standards are currently investigating how to support IoT devices based on ambient energy in NR and Wi-Fi systems, referred to as "ambient IoT" or "AMP IoT" devices. The energy required for their operation is sourced from ambient energy harvesting, and the ambient energy sources may include radio signals, solar energy, thermal energy, and the like. These types of devices are analogous to the passive or semi-passive devices in zero-power communications.

### IV. PPDU in 802.11

In Wi-Fi devices, information is transmitted based on PPDU frames. A PPDU frame includes a physical-layer header and a data portion. For example, in 802.11a/g, the physical-layer header is preceded by three portions: a short training field (STF), a long training field (LTF), and a SIGNAL field containing specific settings for the data portion, as illustrated in FIG. 2, which is a schematic diagram of a PPDU structure according to the present disclosure.

The first portion is the STF. The STF mainly includes 10 short symbols (t1-t10), each symbol being 0.8 µs, includes many functions, and mainly achieves frame synchronization and coarse frequency synchronization. t1-t7 mainly have a signal detection function, an automatic gain control (AGC) function, and a diversity selection function. t8-t10 mainly have a coarse frequency function, an offset estimation function, and a timing synchronization function. The second portion is the LTF, which achieves fine frequency synchronization and channel estimation. The SIGNAL field carries information related to the data portion, including a data transmission rate, data packet length information, reserved bits, and tail bits.

The data portion of the PPDU carries a MAC frame. The MAC frame includes: a MAC header, a frame body, and a frame check sequence (FCS), as illustrated in FIG. 3, which is a schematic diagram of a format of a MAC frame according to the present disclosure.

### V. Unlicensed Spectrum

The unlicensed spectrum refers to a spectrum allocated by countries or regions for the communication of radio devices, and is usually regarded as a shared spectrum. That is, communication devices in different communication systems use the spectrum as long as these communication devices meet the regulatory requirements stipulated by the country or region on the spectrum, without applying for an exclusive spectrum grant from the government. Some countries or regions have stipulated the regulatory requirements that shall be met for using the unlicensed spectrum to ensure that various communication systems using the unlicensed spectrum for wireless communication coexist friendly on the spectrum. For example, in the European region, communication devices follow a "listen-before-talk" (LBT) mechanism. That is, the communication device needs to monitor the channel before transmitting signals on a channel of the unlicensed spectrum, and the communication device transmits signals only in a case where a result of channel sensing indicates that the channel is idle; and in a case where a result of channel sensing by the communication device on the channel of the unlicensed spectrum indicates that the channel is busy, the communication device does not transmit signals. Moreover, a duration where the communication device uses the channel of the unlicensed spectrum for signal transmission does not exceed a maximum channel occupancy time (MCOT) in one transmission to ensure fairness.

Currently, technologies using the unlicensed spectrum have been standardized in cellular communication systems, such as the NR unlicensed (NR-U) technology of the unlicensed frequency band in the 3GPP Rel-16, which uses an unlicensed frequency band below 7 GHz. In subsequent technology evolution, the use of the unlicensed spectrum in higher frequency bands and related technologies may be considered, such as 52.6 GHz-71 GHz discussed in the Rel-17 standard. The widely used Wi-Fi technology is also a communication technology using the unlicensed frequency band.

### VI. Channel Access Mechanism

In the 802.11 standards, a basic channel access protocol is a distributed coordination function (DCF). By means of a Carrier Sense Multiple Access with Collision Avoidance (CSMA/CA) mechanism, different compatible STA devices are allowed to share a channel, reducing the probability of collision occurrence.

The DCF mainly includes four core mechanisms:

### 1) Carrier sensing mechanism

The carrier sensing mechanism includes physical carrier sensing and virtual carrier sensing. Regardless of physical carrier sensing or virtual carrier sensing, the channel is actually in a busy state as long as any sensing result indicates that the channel is busy.

The physical carrier sensing uses three channel idle detection modes, that is, energy detection, carrier detection, and energy-carrier hybrid detection, which are collectively referred to as clear channel assessment (CCA). The energy detection is to assess an energy level of the received signal. In a case where a received power is greater than a threshold ED_threshold specified by the physical layer, the channel is considered to be occupied. The carrier detection is to detect a preamble portion of a signal in the channel, and determine, based on the detection result, whether the channel is occupied.

The virtual carrier-sensing mechanism is provided by a MAC. In the 802.11 standards, virtual carrier sensing is implemented by using a network allocation vector (NAV). A "duration" is stored in a Dur/ID field in a MAC frame. An STA receiving the information determines a duration for which the channel is to be occupied and determines a duration for which its own transmission needs to be delayed. The NAV serves as a timer that specifies a duration for which the current channel needs to be occupied. An initial value is a duration of a frame received last time, and counts down to zero. Every sensing STA uses the NAV timer. During data communication, the STA occupying the channel informs other STAs of a required duration via the Duration field in a frame, while an STA that has not acquired the channel updates its own NAV value by comparing a duration value in a received packet. Only in a case where the NAV value is zero and the physical carrier sensing indicates that the channel is idle, is the current channel considered to be in an idle state.

### 2) Interframe space (IFS) mechanism

To avoid collisions as much as possible, 802.11 standards stipulate that upon completion of transmission, all STAs need to wait for a short period of time (continuing to sense) before the STAs transmit a next frame. This period of time is collectively referred to as an interframe space (IFS). The length of the IFS depends on the type of frame that the STA intends to transmit. A high-priority frame requires a shorter waiting time, and thus preferentially acquires a transmission right. However, a low-priority frame needs to wait for a longer time. In a case where the low-priority frame has not yet been transmitted while another high-priority frame has already been transmitted onto the medium, the medium becomes busy, and consequently, the low-priority frame may only be delayed for transmission again. In this way, the probability of collision occurrence is reduced.

The IFS provides differentiation for accessing the wireless medium with different priorities. Different priorities are differentiated according to the length of time of the IFS. The shorter the time, the higher the corresponding priority. The IFSs are shown in an ascending order in terms of length as follows:

### 1. Short interframe space (SIFS)

The SIFS is the shortest time segment and is used to separate frames requiring immediate response, such as a control frame (request-to-send (RTS)/clear-to-send (CTS)/acknowledgment (ACK), and the like). Using the shortest space between two consecutive transmissions of frame exchange prevents other STAs from waiting for the medium from attempting to use the medium.

### 2. Point coordination function interframe space (PIFS)

The PIFS is only used by an STA operating in a point coordination function (PCF) mode.

### 3. Distributed coordination function interframe space (DIFS)

The DIFS is only used by an STA operating in a DCF mode.

### 4. Extended interframe space (EIFS)

In a case where an error occurs in a previous frame, a transmitter node has to delay for an EIFS instead of a DIFS before transmitting a next frame.

### 3) Random backoff mechanism

In the 802.11 standards, a backoff method is adopted to resolve collisions between nodes. In a case where an STA has a frame to transmit, a backoff procedure is initiated after both physical carrier sensing and virtual carrier sensing indicate that the channel is idle. The STA randomly selects a number x from a contention window (CW) as a backoff counter and performs backoff for x slot times. During the backoff, the idle state of the channel is monitored once within each slot time. In a case where the channel is idle, the counter x is decremented by 1; otherwise, the counter remains unchanged. Once the backoff counter decreases to zero, transmission of the entire data frame starts. The length of the CW is between a minimum contention window (CWmin) and a maximum contention window (CWmax). The CWmin and the CWmax may determine a value range for the node to select the backoff counter.

### 4) RTS/CTS handshake mechanism

IEEE 802.11 RTS/CTS, that is, the Request To Send/Clear To Send protocol, is a mechanism used by the 802.11 standards to reduce collisions caused by hidden nodes. The basic idea of the RTS/CTS mechanism is to reserve a channel via short control packets. In a case where a transmitter STA wants to transmit a message to a receiver STA, the transmitter STA needs to transmit an RTS control frame first. Upon receiving the RTS, an STA around the transmitter STA sets the NAV value thereof based on the Duration field. Upon receiving the RTS, the receiver STA replies with a CTS control frame. Upon receiving the CTS, an STA around the receiver STA sets the NAV value thereof based on the Duration field. An STA with a non-zero NAV value fails to perform channel idle monitoring, thereby avoiding transmission collisions between the transmitter STA and the receiver STA.

Due to the characteristics of low cost, low complexity, and low power consumption, zero-power terminals are widely used in the Wi-Fi and cellular communication systems, such as passive IoT. The use of unlicensed frequency bands is also an important deployment scenario in cellular communication systems. In the case of using the unlicensed spectrum, how a zero-power terminal shares a channel with existing devices for communication to reduce collision and interference is a problem that needs to be solved.

Due to power consumption limitations, zero-power terminals have a requirement for low complexity. For example, a receiver supports only simple modulation and demodulation schemes, such as, ASK, FSK, but does not support orthogonal frequency division multiplexing (OFDM). However, for the unlicensed spectrum, to ensure the fairness in channel usage, a zero-power terminal needs to perform corresponding CCA to determine, in a case where the zero-power terminal needs to occupy a channel for data transmission, whether the channel is idle. Meanwhile, the zero-power terminal also needs to support the CSMA/CA mechanism to be compatible and coexist with existing devices. Taking a Wi-Fi system as an example, channel occupation by a zero-power terminal needs to support the DCF protocol, which requires the zero-power terminal to be able to detect an existing OFDM-based PPDU frame to satisfy physical and virtual carrier sensing, and support the RTS/CTS mechanism. This is impossible for zero-power terminal to implement. To solve the problem, one approach is that the zero-power terminal performs the physical carrier monitoring based on the energy detection, that is, a simplified CSMA/CA mechanism is used. Another approach is to perform transmission based on the channel occupied by the non-zero power device, for example, an AP performs channel access and shares the occupied channel with the zero-power terminal for use. Regardless of which approach is adopted, it is necessary to determine an AC adopted for channel access performed for transmission of the zero-power terminal, so as to facilitate better coexistence of the zero-power terminal with other devices.

In the present disclosure, in terms of the powering mode, the zero-power terminals include ambient-energy-based devices, such as, AMP IoT devices, battery-free terminals, maintenance-free terminals, and the like. The zero-power terminals serve as communication devices in Wi-Fi or the cellular network. The present disclosure is illustrated taking an example of the AMP device, but is not limited to the AMP device only.

In the 802.11e standards involved in some practices, four different priorities, also known as ACs, have been defined to support a quality of service (QoS) function in 802.11. These categories, ranked in a descending order, are AC_VO, AC_VI, AC_BE, and AC_BK, as listed in Table 1 below, and are identified by AC Indexes (ACIs).

**Table 1**

| ACI | AC | Description |
|---|---|---|
| 0 | AC_BE | Best effort |
| 1 | AC_BK | Background |
| 2 | AC_VI | Video |
| 3 | AC_VO | Voice |

Each AC corresponds to a set of EDCA parameters, including CWmin, CWmax, arbitration inter-frame space number (AIFSN), and TXOP limit. The EDCA parameters corresponding to different ACs are notified to the STA by the AP via a beacon frame or a probe response frame. The AIFSN indicates the number of slots for which the STA needs to delay before the backoff count. The total delay duration AIFS for which the STA needs to delay or before the backoff count is calculated using the following formula, where aSlotTime represents the length of one slot and aSIFSTime represents the length of one SIFS:
$AIFS \left[AC\right] = AIFSN \left[AC\right] \times aSlotTime + aSIFSTime .$

The differences in the AIFS, the CWₘᵢₙ, the CWₘₐₓ, and the TXOP limit for various ACs determine differences in channel access priorities. Under the same environmental conditions, the smaller the contention window and the smaller the AIFSN, the faster the STA can perform channel contention; and the larger the TXOP limit, the longer the STA can use the channel, and thus the higher the channel access priority.

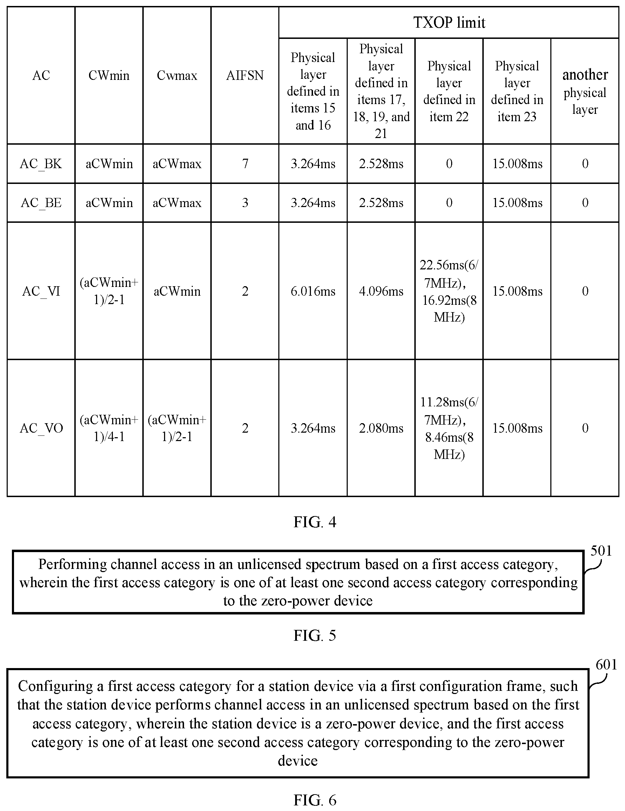

The 802.11 standards define default values of EDCA parameters for different ACs, as illustrated in FIG. 4, which is a schematic diagram of EDCA parameters involved in the present disclosure.

Referring to FIG. 5, which is a flowchart illustrating a method for channel access according to some embodiments of the present disclosure, the method is performed by a station device that is a zero-power device. The station device may be the STA 10 in the network architecture shown in FIG. 1. The method includes the following process:
In S501, channel access is performed in an unlicensed spectrum based on a first access category, wherein the first access category is one of at least one second access category corresponding to the zero-power device.

In the embodiments of the present disclosure, at least one second access category is specially configured for the zero-power device. In a case where a station device, as a zero-power device, performs the channel access in the unlicensed spectrum, the station device performs the channel access based on one of the at least one second access category (i.e., the first access category).

In summary, in the technical solutions according to the embodiments of the present disclosure, the station device, as the zero-power device, performs channel access in the unlicensed spectrum based on one of the at least one second access category specifically configured for the zero-power device. That is, in the above technical solutions, an appropriate AC is configured for the zero-power device, such that the channel access of the station device, as the zero-power device, satisfies the transmission requirement of the zero-power device, thereby reducing the interference and collision between the zero-power device and the non-zero power device, and improving the system performance.

In the embodiments of the present disclosure, the first access category used by the station device is predefined in a protocol or configured for the station device by the AP device.

In some embodiments, the station device performs the channel access in the unlicensed spectrum based on the first access category and an EDCA parameter corresponding to the first access category.

In the embodiments of the present disclosure, the access category specifically configured for the zero-power device has the corresponding EDCA parameter, such that the channel access of the zero-power device satisfies the transmission requirement.

The EDCA parameter includes at least one of a CWₘᵢₙ, a CWₘₐₓ, an AIFSN, or a TXOP limit.

For example, the EDCA parameter for each of the at least one second access category includes the CWₘᵢₙ, the CWₘₐₓ, the AIFSN, and the TXOP limit.

Alternatively, the EDCA parameter for each of the at least one second access category includes any one, any two, or any three of the CWₘᵢₙ, the CWₘₐₓ, the AIFSN, or the TXOP limit. Optionally, other parameters in the CW_{min,} the CWₘₐₓ, the AIFSN, and the TXOP limit may be set to default values.

In some embodiments, the EDCA parameter for the first access category is predefined in a protocol or configured for the station device by the AP device.

By way of an example where the first access category used by the station device is configured by the AP device, referring to FIG. 6 which is a flowchart of the method for channel access according to some embodiments of the present disclosure, the method is performed by the AP device. The AP device may be the AP 20 in the network architecture illustrated in FIG. 1. The method includes the following process:
In S601, a first access category is configured for a station device via a first configuration frame, such that the station device performs channel access in an unlicensed spectrum based on the first access category, wherein the station device is a zero-power device, and the first access category is one of at least one second access category corresponding to the zero-power device.

In summary, in the technical solutions according to the embodiments of the present disclosure, the station device, as the zero-power device, performs channel access in the unlicensed spectrum based on one of the at least one second access category that is indicated by the AP device to specifically configure for the zero-power device. That is, in the above technical solutions, an appropriate AC is configured for the zero-power device, such that the channel access of the station device, as the zero-power device, satisfies the transmission requirement of the zero-power device, thereby reducing the interference and collision between the zero-power device and the non-zero power device, and improving the system performance.

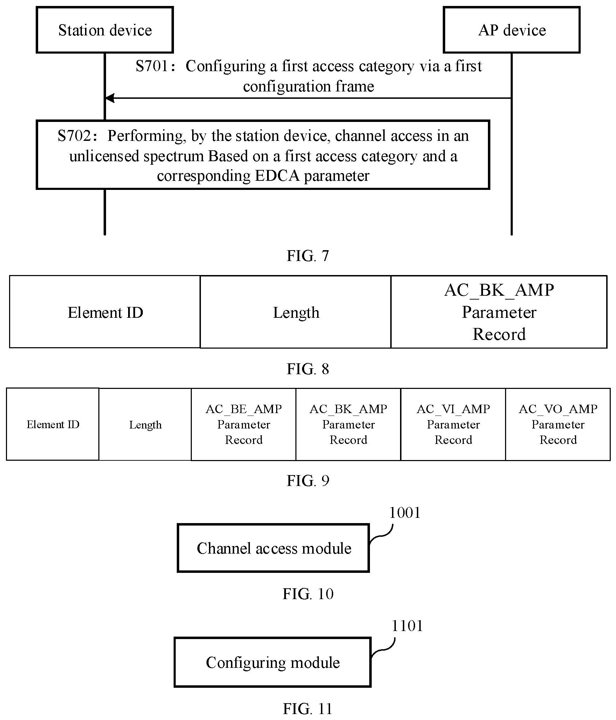

By way of an example where the first access category used by the station device is configured by the AP device, referring to FIG. 7 which is a flowchart of the method for channel access according to some embodiments of the present disclosure, the method is performed via interaction between the station device and the AP device. The station device and the AP device respectively correspond to the STA 10 and the AP 20 in the network architecture illustrated in FIG. 1. The station device is a zero-power device, and the method includes the following processes:
In S701, an AP device configures a first access category for a station device via a first configuration frame, wherein the first access category is one of at least one second access category corresponding to the zero-power device.

That is, the first access category is configured by the AP device via the first configuration frame.

In some embodiments, the first configuration frame includes: a beacon frame and/or a probe response frame.

For example, the AP device transmits the beacon frame to the station device, and the beacon frame indicates that the station device performs the channel access based on the first access category.

Alternatively, the AP device transmits the probe response frame to the station device, and the probe response frame indicates that the station device performs the channel access based on the first access category.

Alternatively, the AP device transmits the beacon frame and the probe response frame to the station device, and the beacon frame and the probe response frame indicate that the station device performs the channel access based on the first access category.

Alternatively, the AP device transmits the beacon frame to the station device, and the beacon frame indicates at least one second access category usable by the station device. Subsequently, the AP device transmits the probe response frame to the station device, and the probe response frame indicates that the STA uses one of the at least one second access category (i.e., the first access category) to perform the channel access.

In some embodiments, the EDCA parameter corresponding to the first access category is configured by the AP device via a second configuration frame. That is, the AP device configures the EDCA parameter corresponding to the first access category for the station device via the second configuration frame.

In some embodiments, the second configuration frame includes: a beacon frame and/or a probe response frame.

For example, the AP device transmits the beacon frame to the station device, and the beacon frame includes the EDCA parameter corresponding to the first access category.

Alternatively, the AP device transmits the probe response frame to the station device, and the probe response frame includes the EDCA parameter corresponding to the first access category.

Alternatively, the AP device transmits the beacon frame and the probe response frame to the station device, and the beacon frame and the probe response frame include the EDCA parameter corresponding to the first access category.

Alternatively, the AP device transmits the beacon frame to the station device, and the beacon frame includes a plurality of types of EDCA parameters. Subsequently, the AP device transmits the probe response frame to the station device, and the probe response frame indicates that the STA uses one type of the plurality of types of EDCA parameters as the EDCA parameter corresponding to the first access category.

In some embodiments, at least one second access category is identical to at least one of the plurality of access categories corresponding to the non-zero power device.

In the embodiments of the present disclosure, one or more types of the plurality of access categories corresponding to the non-zero power device (such as the four access categories in Table 1) are set as the at least one second access category used by the zero-power device.

For example, the at least one second access category includes a single access category, and the single access category may be AC_BK in Table 1. In this case, the first access category is AC_BK.

For another example, the at least one second access category includes two access categories, and the two access categories may be AC_BK and AC_BE in Table 1. In this case, the first access category is one of AC_BK and AC_BE.

In some embodiments, part of the at least one second access category is identical to all or part of the plurality of access categories corresponding to the non-zero power device. That is, at least one second access category used by the zero-power-consumption device overlaps (or intersects) with the plurality of access categories corresponding to the non-zero power device.

For example, the at least one second access category includes two access categories. One is an access category in Table 1 (e.g., AC_BK), and the other access category is not any of the access categories in Table 1.

In some embodiments, the at least one second access category is different from the access categories corresponding to the non-zero power device.

In some embodiments of the present disclosure, in addition to the four access categories listed in Table 1, one or more new access categories are set as the at least one second access category use by the zero-power device. That is, any one of the at least one second access category is different from any one of the access categories used by the non-zero power device.

In some embodiments, in the case where at least one second access category is different from the access categories corresponding to the non-zero power device and the EDCA parameter includes an AIFSN, a first AIFSN is less than a second AIFSN.

The first AIFSN is a maximum value in AIFSNs of the at least one second access category, and the second AIFSN is a minimum value in AIFSNs of the access categories corresponding to the non-zero power device.

In the implementations of the present disclosure, in the case where any one of the at least one second access category is different from the access categories used by the non-zero power device, the AIFSN in the EDCA parameter of the AC used by the zero-power device is less than the AIFSN in the EDCA parameter of the AC used by the non-zero power device. That is, the priority of the channel access of the zero-power device is lower than the priority of the channel access of the non-zero power device.

In some embodiments, in a case where at least one second access category is different from the access categories corresponding to the non-zero power device and the EDCA parameter includes a CWₘᵢₙ, a first CWₘᵢₙ is greater than a second CWₘᵢₙ.

The first CWₘᵢₙ is a minimum in CWsₘᵢₙ of the at least one second access category, and the second CWₘᵢₙ is a maximum value in CWsₘᵢₙ of the access categories corresponding to the non-zero power device.

In the implementations of the present disclosure, in a case where any one of the at least one second access category is different from the access categories used by the non-zero power device, the CWₘᵢₙ in the EDCA parameter of the AC used by the zero-power device is greater than the CWₘᵢₙ in the EDCA parameter of the AC used by the non-zero power device. That is, the priority of the channel access of the zero-power device is lower than the priority of the channel access of the non-zero power device.

In some embodiments, in a case where at least one second access category is different from the access categories corresponding to the non-zero power device and the EDCA parameter includes a CWₘₐₓ, a first CWₘₐₓ is greater than a second CWₘₐₓ.

The first CWₘₐₓ is a minimum value in CWsₘₐₓ of the at least one second access category, and the second CWₘₐₓ is a maximum value in CWsₘₐₓ of the access categories corresponding to the non-zero power device.

In the implementations of the present disclosure, in a case where any one of the at least one second access category is different from the access categories used by the non-zero power device, the CWₘₐₓ in the EDCA parameter of the AC used by the zero-power device is greater than the CWₘₐₓ in the EDCA parameter of the AC used by the non-zero power device. That is, the priority of the channel access of the zero-power device is lower than the priority of the channel access of the non-zero power device.

In some embodiments, in a case where at least one second access category is different from the access categories corresponding to the non-zero power device, and the EDCA parameter includes a TXOP limit, a first TXOP limit is shorter than a second TXOP limit.

The first TXOP limit is a maximum value in TXOP limits corresponding to the at least one second access category, and the second TXOP limit is a minimum value in TXOP limits corresponding to the access categories corresponding to the non-zero power device.

In the implementations of the present disclosure, in a case where any one of the at least one second access category is different from the access categories used by the non-zero power device, the TXOP limit in the EDCA parameter of the AC used by the zero-power device is shorter than the TXOP limit in the EDCA parameter of the AC used by the non-zero power device. That is, the priority of the channel access of the zero-power device is lower than the priority of the channel access of the non-zero power device.

In some embodiments, the first access category is associated with at least one of the following pieces of information associated with the station device:
a type of the zero-power device, an energy harvesting scheme, an energy storage capacity, or an energy storage state.

In some embodiments, the EDCA parameter corresponding to the first access category is associated with at least one of the following pieces of information associated with the station device:
a type of the zero-power device, an energy harvesting scheme, an energy storage capacity, or an energy storage state.

The type of the zero-power device refers to classifications of zero-power devices, including a passive zero-power device, a semi-passive zero-power device, an active zero-power device, and the like.

The energy harvesting scheme includes RF signals, solar energy, mechanical energy, and the like

The energy storage capacity indicates the capacity of an energy storage module in the station device, such as the capacitance of a capacitor.

The energy storage state indicates a current amount or ratio of stored energy in the station device. For example, the energy storage state indicates an absolute amount of the current stored energy, or indicates a ratio of an absolute amount of previously stored energy to the capacity of the energy storage module.

That is, the first access category and/or the EDCA parameter corresponding to the first access category are determined in conjunction with the type of the zero-power device, the energy harvesting scheme, the energy storage capacity, and/or the energy storage state of the station device.

For example, the AP device determines the first access category and/or the EDCA parameter corresponding to the first access category based on the type of the zero-power device, the energy harvesting scheme, the energy storage capacity, and/or the energy storage state of the station device, and configures the first access category and/or the EDCA parameter corresponding to the first access category to the station device via the configuration frame (the first configuration frame and/or the second configuration frame).

In some embodiments, the station device reports device capability information to the AP device in advance. For example, in a case where the station device is first installed or restarted, the station device performs the channel access based on the default access category (such as one of the ACs in Table 1) and the corresponding EDCA parameter, and then reports the capability information to the AP. The capability information may include the type of the zero-power device, the energy harvesting scheme, the energy storage capacity, and/or the energy storage state.

In S702, the station device performs the channel access in the unlicensed spectrum based on the first access category and the EDCA parameter corresponding to the first access category.

The embodiments of the present disclosure are illustrated taking an example where the first access category used by the station device is configured by the AP device. Optionally, in some embodiments, the first access category is predefined in the protocol.

For example, the protocol predefines that the zero-power device uses a single access category (which may be one category in Table 1, such as AC_BK, or a new AC not listed in Table 1). Subsequently, the station device performs the channel access in the unlicensed spectrum based on the access category.

For another example, the protocol predefines a plurality of second access categories for the zero-power device and establishes the correlation between the plurality of second access categories and the device capability information. The capability information includes the type of the zero-power device, the energy harvesting scheme, the energy storage capacity, and/or the energy storage state. The station device, as the zero-power device, determines the first access category from the plurality of second access categories based on the information predefined in the protocol and its own capability information.

Optionally, in some embodiments, the EDCA parameter corresponding to the first access category is predefined in the protocol.

For example, the protocol predefines that the zero-power device uses a single EDCA parameter (which may be one category in Table 1, such as AC_BK, or a new AC not shown in Table 1). Subsequently, the station device uses the EDCA parameter to perform the channel access in the unlicensed spectrum.

For example, the protocol predefines a plurality of EDCA parameters for the zero-power device and establishes the correlations between the plurality of EDCA parameters and the device capability information. The capability information includes the type of the zero-power device, the energy harvesting scheme, the energy storage capacity, and/or the energy storage state. The station device, as the zero-power device, determines the EDCA parameter corresponding to the first access category from the plurality of EDCA parameters based on the information predefined in the protocol and its own capability information.

In the related technologies, the AC and the corresponding EDCA parameters are supported by legacy 802.11-compliant devices. Taking an example where the zero-power device is an AMP device, in the case where a newly joined AMP device, such as an AMP STA, performs the channel access due to data transmission, it is necessary to define an appropriate AC to reduce the impact on the transmission of the legacy 802.11-compliant devices, such as the throughput and the latency. In this case, based on the characteristics of the AMP STA, an appropriate AC should be selected to satisfy the transmission requirements of the AMP STA.

In conjunction with any embodiment illustrated in FIGS. 5 to 7, the present disclosure provides a channel access solution for the zero-power device. The channel access is to facilitate transmission of the AMP STA. However, the entity performing the channel access is not limited, which may be an AP, an STA, or an AMP STA. The technical solutions according to the present disclosure provide a method for determining a type of channel access, where a corresponding AC of the channel access is used for the channel access performed for the transmission of the AMP STA. By an example where the zero-power device is an AMP device, the solutions according to the present disclosure are as follows:

### Embodiment 1: The AC and the EDCA parameter used by the AMP STA are predefined.

The type of the data uplink-transmitted by the AMP STA is typically data collected by the sensor. For most of data of the type, the QoS is not sensitive to the latency, such as meter-reading data, and the data amount is relatively small, which are similar to the legacy background-type services. Therefore, a default AC is predefined for the data transmitted by the AMP STA.

Specifically, the AC may be one of the four ACs defined in existing technologies, such as AC_BK. The AC_BK used by the AMP STA uses the default EDCA parameter, and the default EDCA parameter is identical to the default EDCA parameter used by the legacy AC_BE.

Specifically, the AC may be an AC (such as AC_BK_AMP) that is used exclusively by the AMP STA, and may correspond to a set of default EDCA parameters. For example, as shown in the following table, the AC_BK_AMP defined for the AMP STA has a larger AIFSN than the legacy AC_BK, and thus the AC_BK_AMP has a lower priority than the AC_BK. Additionally, specific CWₘᵢₙ, CWₘₐₓ, and TXOP limit are configured for the AMP STA. For example, as listed in Table 2, the AC_BK_AMP has a larger CWₘᵢₙ and CWₘₐₓ and a smaller TXOP limit than the legacy AC_BK.

**Table 2**

| AC | CWₘᵢₙ | CWₘₐₓ | AIFSN | TXOP limit |
|---|---|---|---|---|
| AC_BK_AMP | aCWₘᵢₙ | aCWₘₐₓ | 9 | 2.528 ms |

### Embodiment 2: The AP configures the AC and the EDCA parameter for the AMP STA.

In the existing technologies, EDCA parameters corresponding to different ACs are notified to the STA via the beacon frame or the probe response frame, and the different ACs include the four currently defined ACs. In the method, the AP configures the AC and the EDCA parameter for the AMP STA. For example, the AP notifies the AMP STA of the parameters via the beacon frame or the probe response frame that is receivable by the AMP STA. Similar to the format of the elements currently used to carry the EDCA parameter corresponding to the AC, a schematic diagram of elements of EDCA parameters of an AC corresponding to an AMP STA indicated by an AP is shown in FIG. 8.

### Embodiment 3: A plurality of ACs and EDCA parameters corresponding to the AMP STA.

As the data transmitted by AMP STA also includes delay-sensitive services, such as fire alarms and logistics identification, a plurality types of ACs and EDCA parameters are actually defined for the channel access of the AMP STA.

Similar to Embodiments 1 and 2, the plurality types of ACs and the corresponding EDCA parameters may be default EDCA parameters or configured by the AP. For example, the AP configures EDCA parameters corresponding to AC_VO_AMP, AC_VI_AMP, AC_BE_AMP, and AC_BK_AMP. The format of elements of EDCA parameters configured by an AP are illustrated in FIG. 9.

This embodiment does not limit whether the plurality types of ACs and EDCA parameters corresponding to the AMP STA are related to the legacy AC_VO, AC_VI, AC_BE, and AC_BK in terms of both the quantity and the meaning. For example, ACs different from the legacy ACs are defined for the AMP STA, and the ACs correspond to specific EDCA parameters.

### Embodiment 4: The EDCA parameter of the AC corresponding to the AMP STA are related to the type of the device, the energy harvesting scheme, or the energy storage state.

In related technologies, ACs are designed for the non-AMP device, and the legacy 802.11-compliant devices harvest energy from batteries or power supplies. Therefore, only the QoS of the service of transmission of the STA is considered for the EDCA parameter corresponding to the AC. The AMP STA harvests energy from environment, which lacks stability, and thus requires a prolonged energy-harvesting duration, and has a shorter operational duration. In a case where a collision occurs in transmission of the AMP STA, uplink transmission fails, and another contention for uplink resources is required. During the process, due to the limited energy storage capacity of the AMP STA, the AMP STA does not support the prolonged resource contention duration or the uplink transmission attempt, and consequently the AMP STA fails to complete the uplink transmission within a given duration. For example, in a logistics scenario, an item passes along a conveyor belt within a finite duration, and a failure to information report may lead to missed detection of the item. Consequently, the AMP STA based on ambient environment energy harvesting requires a high success rate of channel access, and thus requires a higher channel-access priority.

Furthermore, AMP STAs in different energy storage states have different requirements for the channel access priority, and the zero-power terminal with the low energy storage needs the higher channel access priority urgently.

In the embodiments, the AC corresponding to the AMP STA may be related to, in addition to the QoS of the service, the type of the device, the energy harvesting scheme, the energy storage capacity, and the energy storage state.

Specifically, for the STA of the AMP type, specific ACs and corresponding EDCA parameters may be used (referring to the solutions in Embodiments 1 to 3).

Specifically, for the energy harvesting scheme used by the AMP STA, the corresponding AC and the associated EDCA parameter are used. For example, different energy harvesting schemes (such as RF signals, solar energy, and mechanical energy) exhibit different rates and stability levels in the energy harvesting. In different scenarios, AMP STAs that support different types of ambient energy exhibit different efficiencies in the ambient energy harvesting. For example, in outdoor daytime scenarios, the AMP STA that supports the solar energy harvesting exhibits a higher energy-harvesting efficiency. In indoor scenarios, the AMP STA that supports the radio-frequency energy harvesting exhibits a higher efficiency. In some special scenarios, the AMP STA based on the mechanical or thermal energy also exhibits a superior energy-harvesting efficiency. Consequently, AMP STAs that support different types of ambient energy may have different channel access priorities, and may use corresponding ACs and corresponding EDCA parameters. The ACs and the corresponding EDCA parameters may be defined in the technical solutions according to Embodiments 1 to 3.

Specifically, different energy-storage capacities of AMP STAs correspond to different ACs and EDCA parameters. The AMP STA is provided with an energy-storage module used for the operation. Due to different size requirements and capability requirements, different AMP STAs have different energy-storage capacities. For example, the capacitor is used as an energy-storage module. The capacitors have different capacitances, and the common capacitors ranges from tens to hundreds of microfarads (µF). For the AMP STA with the lower energy-storage capacity, the supported duration of the channel-access attempt is also short, and thus the AMP STA requires a higher channel-access priority.

Specifically, different energy storage states of AMP STAs correspond to different ACs and EDCA parameters. AMP STAs with different energy storage states have different requirements for the success rate of channel access, and the zero-power terminal with less stored energy has a more urgent need for an improved success rate of channel access and thus requires a higher channel-access priority.

In the embodiments, the AC and the EDCA parameter corresponding to the AMP STA may be determined in the solutions according to Embodiments 1 to 3.

Referring to FIG. 10, which is a block diagram of an apparatus for channel access according to some embodiments of the present disclosure, the apparatus has the function to implement the processes performed by the station device in the method for channel access, and includes:
a channel access module 1001, configured for a station device to perform channel access in an unlicensed spectrum based on a first access category, wherein the first access category is one of at least one second access category corresponding to a zero-power device, and the station device is the zero-power device.

In some embodiments, performing the channel access in the unlicensed spectrum based on the first access category includes: performing the channel access in the unlicensed spectrum based on the first access category and an EDCA parameter corresponding to the first access category.

In some embodiments, the first access category is predefined in a protocol.

In some embodiments, the first access category is configured by an AP device via a first configuration frame.

In some embodiments, the first configuration frame includes: a beacon frame and/or a probe response frame.

In some embodiments, an EDCA parameter corresponding to the first access category is predefined in a protocol.

In some embodiments, an EDCA parameter corresponding to the first access category is configured by an AP device via a second configuration frame.

In some embodiments, the second configuration frame includes: a beacon frame and/or a probe response frame.

In some embodiments, the at least one second access category is identical to at least one of a plurality of access categories corresponding to a non-zero power device.

In some embodiments, the at least one second access category is different from access categories corresponding to a non-zero power device.

In some embodiments, in a case where an EDCA parameter includes an AIFSN, a first AIFSN is less than a second AIFSN, wherein the first AIFSN is a maximum value in AIFSNs of the at least one second access category, and the second AIFSN is a minimum value in AIFSNs of the access categories corresponding to the non-zero power device.

In some embodiments, in a case where an EDCA parameter includes a CWₘᵢₙ, a first CWₘᵢₙ is greater than a second CWₘᵢₙ, wherein the first CWₘᵢₙ is a minimum value in CWsₘᵢₙ of the at least one second access category, and the second CWₘᵢₙ is a maximum value in CWsₘᵢₙ of the access categories corresponding to the non-zero power device.

In some embodiments, in a case where an EDCA parameter includes a CWₘₐₓ, a first CWmax is greater than a second CWmax, wherein the first CWₘₐₓ is a minimum value in CWsₘₐₓ of the at least one second access category, and the second CWₘₐₓ is a maximum value in CWsₘₐₓ of the access categories corresponding to the non-zero power device.

In some embodiments, in a case where an EDCA parameter includes a TXOP limit, a first TXOP limit is shorter than a second TXOP limit, wherein the first TXOP limit is a maximum value in TXOP limits of the at least one second access category, and the second TXOP limit is a minimum value in TXOP limits corresponding to the access categories of the non-zero power device.

In some embodiments, the first access category is associated with at least one of following pieces of information of the station device: a type of the zero-power device, an energy harvesting scheme, an energy storage capacity, or an energy storage state.

Referring to FIG. 11, which is a block diagram of an apparatus for channel access according to some embodiments of the present disclosure, the apparatus has the function to implement the processes performed by the AP device in the method for channel access. As illustrated in FIG. 11, the apparatus includes:
a configuring module 1101, adapted to configure a first access category for a station device via a first configuration frame, such that the station device performs channel access in an unlicensed spectrum based on the first access category, wherein the station device is a zero-power device, and the first access category is one of at least one second access category corresponding to the zero-power device.

In some embodiments, the first configuration frame includes: a beacon frame and/or a probe response frame.

In some embodiments, an EDCA parameter corresponding to the first access category is predefined in a protocol.

In some embodiments, the configuring module is further adapted to configure an EDCA parameter corresponding to the first access category for the station device via a second configuration frame.

In some embodiments, the second configuration frame includes: a beacon frame and/or a probe response frame.

In some embodiments, the at least one second access category is identical to at least one of a plurality of access categories corresponding to a non-zero power device.

In some embodiments, the at least one second access category is different from access categories corresponding to a non-zero power device.

In some embodiments, in a case where an EDCA parameter includes an AIFSN, a first AIFSN is less than a second AIFSN, wherein the first AIFSN is a maximum value in AIFSNs of the at least one second access category, and the second AIFSN is a minimum value in AIFSNs of the access categories corresponding to the non-zero power device.

In some embodiments, in a case where an EDCA parameter includes a CWₘᵢₙ, a first CWₘᵢₙ is greater than a second C_{Wmin}, wherein the first CWₘᵢₙ is a minimum value in CWsₘᵢₙ of the at least one second access category, and the second CWₘᵢₙ is a maximum value in CWsₘᵢₙ of the access categories corresponding to the non-zero power device.

In some embodiments, in a case where an EDCA parameter includes a CWₘₐₓ, a first CWₘₐₓ is greater than a second CWₘₐₓ, wherein the first CWₘₐₓ is a minimum value in CWsₘₐₓ of the at least one second access category, and the second CWₘₐₓ is a maximum value in CWsₘₐₓ of the access categories corresponding to the non-zero power device.

In some embodiments, in a case where an EDCA parameter includes a TXOP limit, a first TXOP limit is shorter than a second TXOP limit, wherein the first TXOP limit is a maximum value in TXOP limits of the at least one second access category, and the second TXOP limit is a minimum value in TXOP limits corresponding to the access categories of the non-zero power device.

In some embodiments, the first access category is associated with at least one of following pieces of information of the station device: a type of the zero-power device, an energy harvesting scheme, an energy storage capacity, or an energy storage state.

It should be noted that, in the case that the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific manner in which each module performs the operation has been described in detail in the embodiments related to the method and will not be described in detail herein.

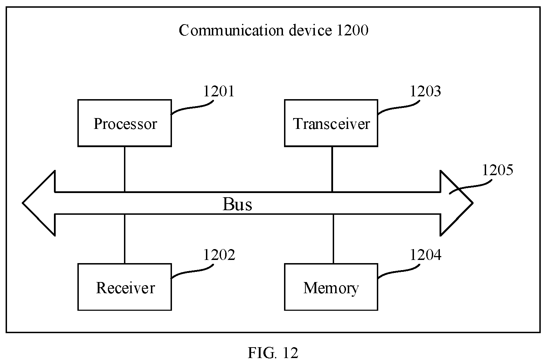

Referring to FIG. 12, which is a schematic structural diagram of a communication device 1200 according to some embodiments of the present disclosure, the communication device 1200 includes: a processor 1201, a receiver 1202, a transceiver 1203, a memory 1204, and a bus 1205.

The processor 1201 includes one or more processing cores, and the processor 1201 runs various functional applications and performs information processing by running software programs and modules.

The receiver 1202 and the transmitter 1203 are practiced as the same communication assembly. The communication assembly may be a communication chip. The communication chip is also referred to as a transceiver.

The memory 1204 is connected to the processor 1201 over the bus 1205.

The memory 1204 is configured to store one or more computer programs, and the processor 1201 is configured to load and run the one or more computer programs to perform the processes performed by the terminal device in the above method embodiments.

In addition, the memory 1204 may be implemented by any type or combination of volatile or non-volatile storage devices, including, but not limited to: a magnetic or optical disc, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the communication includes a processor, a memory, and a transceiver (the transceiver includes a receiver and a transmitter, where the receiver is configured to receive information, and the transmitter is configured to transmit information).

In some embodiments, the processor and the transceiver are configured to perform all or part of processes performed by the station device or the AP device in any embodiment of FIGS. 5, 6, or 7, which are not described herein again.

The embodiments of the present disclosure further provide a computer-readable storage medium storing one or more computer programs. The one or more computer programs, when loaded and run by a processor, cause the processor to perform all or part of processes performed by the station device or the AP device in any embodiment of FIGS. 5, 6, or 7, which are not described herein again.

The embodiments of the present disclosure further provide a computer program product. The computer program product includes one or more computer instructions stored in a computer-readable storage medium. The one or more computer instructions, when read from the computer-readable storage medium and executed by a processor of a communication device, cause the communication device to perform all or part of processes performed by the station device or the AP device in any embodiment of FIGS. 5, 6, or 7, which are not described herein again.

The embodiments of the present disclosure further provide a chip. The chip includes programmable logic circuitry and/or one or more program instructions. The chip, when running in a communication device, causes the communication device to perform all or part of processes performed by the station device or the AP device in any embodiment of FIGS. 5, 6, or 7, which are not described herein again.

The embodiments of the present disclosure further provide a computer program. The computer program, when loaded and run by a processor of a communication device, cause the communication device to perform all or part of processes performed by the station device or the AP device in any embodiment of FIGS. 5, 6, or 7, which are not described herein again.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for channel access, performed by a station device, the station device being a zero-power device, the method comprising:
performing channel access in an unlicensed spectrum based on a first access category, wherein the first access category is one of at least one second access category corresponding to the zero-power device.

2. The method according to claim 1, wherein performing the channel access in the unlicensed spectrum based on the first access category comprises:
performing the channel access in the unlicensed spectrum based on the first access category and an enhanced distributed channel access (EDCA) parameter corresponding to the first access category.

3. The method according to claim 1 or 2, wherein the first access category is predefined in a protocol.

4. The method according to claim 1 or 2, wherein the first access category is configured by an access point (AP) device via a first configuration frame.

5. The method according to claim 4, wherein the first configuration frame comprises a beacon frame and/or a probe response frame.

6. The method according to any one of claims 1 to 5, wherein an enhanced distributed channel access (EDCA) parameter corresponding to the first access category is predefined in a protocol.

7. The method according to any one of claims 1 to 5, wherein an enhanced distributed channel access (EDCA) parameter corresponding to the first access category is configured by an access point (AP) device via a second configuration frame.

8. The method according to claim 7, wherein the second configuration frame comprises a beacon frame and/or a probe response frame.

9. The method according to any one of claims 1 to 8, wherein the at least one second access category is identical to at least one of a plurality of access categories corresponding to a non-zero power device.

10. The method according to any one of claims 1 to 8, wherein the at least one second access category is different from access categories corresponding to a non-zero power device.

11. The method according to claim 10, wherein in a case where an enhanced distributed channel access (EDCA) parameter comprises an arbitration inter-frame space number (AIFSN), a first AIFSN is less than a second AIFSN, wherein the first AIFSN is a maximum value in AIFSNs of the at least one second access category, and the second AIFSN is a minimum value in AIFSNs of the access categories corresponding to the non-zero power device.

12. The method according to claim 10 or 11, wherein, in a case where an enhanced distributed channel access (EDCA) parameter comprises a minimum contention window (CWmin), a first CWₘᵢₙ is greater than a second CWₘᵢₙ, wherein the first CWₘᵢₙ is a minimum value in CWsₘᵢₙ of the at least one second access category, and the second CWₘᵢₙ is a maximum value in CWsₘᵢₙ of the access category corresponding to the non-zero power device.

13. The method according to any one of claims 10 to 12, wherein in a case where an enhanced distributed channel access (EDCA) parameter comprises a maximum contention window (CWₘₐₓ), a first CWₘₐₓ is greater than a second CWₘₐₓ, wherein the first CWₘₐₓ is a minimum value in CWsₘₐₓ of the at least one second access category, and the second CWₘₐₓ is a maximum value in CWsₘₐₓ of the access categories corresponding to the non-zero power device.

14. The method according to any one of claims 10 to 13, wherein in a case where an enhanced distributed channel access (EDCA) parameter comprises a transmission opportunity (TXOP) limit, a first TXOP limit is shorter than a second TXOP limit, wherein the first TXOP limit is a maximum value in TXOP limits of the at least one second access category, and the second TXOP limit is a minimum value in TXOP limits corresponding to the access categories of the non-zero power device.

15. The method according to any one of claims 1 to 14, wherein the first access category is associated with at least one of following pieces of information of the station device: a type of the zero-power device, an energy harvesting scheme, an energy storage capacity, or an energy storage state.

16. A method for channel access, performed by an access point (AP) device, the method comprising:
configuring a first access category for a station device via a first configuration frame, such that the station device performs channel access in an unlicensed spectrum based on the first access category, wherein the station device is a zero-power device, and the first access category is one of at least one second access category corresponding to the zero-power device.

17. The method according to claim 16, wherein the first configuration frame comprises a beacon frame and/or a probe response frame.

18. The method according to claim 16 or 17, wherein an enhanced distributed channel access (EDCA) parameter corresponding to the first access category is predefined in a protocol.

19. The method according to claim 16 or 17, further comprising:
configuring an enhanced distributed channel access (EDCA) parameter corresponding to the first access category for the station device via a second configuration frame.

20. The method according to claim 19, wherein the second configuration frame comprises a beacon frame and/or a probe response frame.

21. The method according to any one of claims 16 to 20, wherein the at least one second access category is identical to at least one of a plurality of access categories corresponding to a non-zero power device.

22. The method according to any one of claims 16 to 20, wherein the at least one second access category is different from access categories corresponding to a non-zero power device.

23. The method according to claim 22, wherein in a case where an enhanced distributed channel access (EDCA) parameter comprises an arbitration inter-frame space number (AIFSN), a first AIFSN is less than a second AIFSN, wherein the first AIFSN is a maximum value in AIFSNs of the at least one second access category, and the second AIFSN is a minimum value in AIFSNs of the access categories corresponding to the non-zero power device.

24. The method according to claim 22 or 23, wherein in a case where an enhanced distributed channel access (EDCA) parameter comprises a minimum contention window (CWₘᵢₙ), a first CWmin is greater than a second CWₘᵢₙ, wherein the first CWₘᵢₙ is a minimum value in CWsₘᵢₙ of the at least one second access category, and the second CWₘᵢₙ is a maximum value in CWsₘᵢₙ of the access categories corresponding to the non-zero power device.

25. The method according to any one of claims 22 to 24, wherein in a case where an enhanced distributed channel access (EDCA) parameter comprises a maximum contention window (CWₘₐₓ), a first CWₘₐₓ is greater than a second CWₘₐₓ, wherein the first CWₘₐₓ is a minimum value in CWsₘₐₓ of the at least one second access category, and the second CWₘₐₓ is a maximum value in CWsₘₐₓ of the access categories corresponding to the non-zero power device.

26. The method according to any one of claims 22 to 25, wherein in a case where an enhanced distributed channel access (EDCA) parameter comprises a transmission opportunity (TXOP) limit, a first TXOP limit is shorter than a second TXOP limit, wherein the first TXOP limit is a maximum value in TXOP limits of the at least one second access category, and the second TXOP limit is a minimum value in TXOP limits corresponding to the access categories of the non-zero power device.

27. The method according to any one of claims 16 to 26, wherein the first access category is associated with at least one of following pieces of information of the station device: a type of the zero-power device, an energy harvesting scheme, an energy storage capacity, or an energy storage state.

28. An apparatus for channel access, comprising:
a channel access module, configured for a station device to perform channel access in an unlicensed spectrum based on a first access category, wherein the first access category is one of at least one second access category corresponding to a zero-power device, and the station device is the zero-power device.

29. The apparatus according to claim 28, wherein performing the channel access in the unlicensed spectrum based on the first access category comprises:
performing the channel access in the unlicensed spectrum based on the first access category and an enhanced distributed channel access (EDCA) parameter corresponding to the first access category.

30. The apparatus according to claim 28 or 29, wherein the first access category is predefined in a protocol.

31. The apparatus according to claim 28 or 29, wherein the first access category is configured by an access point (AP) device via a first configuration frame.

32. The apparatus according to claim 31, wherein the first configuration frame comprises a beacon frame and/or a probe response frame.

33. The apparatus according to any one of claims 28 to 32, wherein an enhanced distributed channel access (EDCA) parameter corresponding to the first access category is predefined in a protocol.

34. The apparatus according to any one of claims 28 to 32, wherein an enhanced distributed channel access (EDCA) parameter corresponding to the first access category is configured by an access point (AP) device via a second configuration frame.

35. The apparatus according to claim 34, wherein the second configuration frame comprises a beacon frame and/or a probe response frame.

36. The apparatus according to any one of claims 28 to 35, wherein the at least one second access category is identical to at least one of a plurality of access categories corresponding to a non-zero power device.

37. The apparatus according to any one of claims 28 to 35, wherein the at least one second access category is different from access categories corresponding to a non-zero power device.

38. The apparatus according to claim 37, wherein in a case where an enhanced distributed channel access (EDCA) parameter comprises an arbitration inter-frame space number (AIFSN), a first AIFSN is less than a second AIFSN, wherein the first AIFSN is a maximum value in AIFSNs of the at least one second access category, and the second AIFSN is a minimum value in AIFSNs of the access categories corresponding to the non-zero power device.

39. The apparatus according to claim 37 or 38, wherein in a case where an enhanced distributed channel access (EDCA) parameter comprises a minimum contention window (CWₘᵢₙ), a first CWₘᵢₙ is greater than a second CWₘᵢₙ, wherein the first CWₘᵢₙ is a minimum value in CWsₘᵢₙ of the at least one second access category, and the second CWₘᵢₙ is a maximum value in CWsₘᵢₙ of the access categories corresponding to the non-zero power device.

40. The apparatus according to any one of claims 37 to 39, wherein in a case where an enhanced distributed channel access (EDCA) parameter comprises a maximum contention window (CWₘₐₓ), a first CWₘₐₓ is greater than a second CWₘₐₓ, wherein the first CWₘₐₓ is a minimum value in CWsₘₐₓ of the at least one second access category, and the second CWₘₐₓ is a maximum value in CWsₘₐₓ of the access categories corresponding to the non-zero power device.

41. The apparatus according to any one of claims 37 to 40, wherein in a case where an enhanced distributed channel access (EDCA) parameter comprises a transmission opportunity (TXOP) limit, a first TXOP limit is shorter than a second TXOP limit, wherein the first TXOP limit is a maximum value in TXOP limits of the at least one second access category, and the second TXOP limit is a minimum value in TXOP limits corresponding to the access categories of the non-zero power device.

42. The apparatus according to any one of claims 28 to 41, wherein the first access category is associated with at least one of following pieces of information of the station device: a type of the zero-power device, an energy harvesting method, an energy storage capacity, or an energy storage state.

43. An apparatus for channel access, comprising:
a configuring module, adapted to configure a first access category for a station device via a first configuration frame, such that the station device performs channel access in an unlicensed spectrum based on the first access category, wherein the station device is a zero-power device, and the first access category is one of at least one second access category corresponding to the zero-power device.

44. The apparatus according to claim 43, wherein the first configuration frame comprises a beacon frame and/or a probe response frame.

45. The apparatus according to claim 43 or 44, wherein an enhanced distributed channel access (EDCA) parameter corresponding to the first access category is predefined in a protocol.

46. The apparatus according to claim 43 or 44, wherein the configuring module is further adapted to configure an enhanced distributed channel access (EDCA) parameter corresponding to the first access category for the station device via a second configuration frame.

47. The apparatus according to claim 46, wherein the second configuration frame comprises a beacon frame and/or a probe response frame.

48. The apparatus according to any one of claims 43 to 47, wherein the at least one second access category is identical to at least one of a plurality of access categories corresponding to a non-zero power device.

49. The apparatus according to any one of claims 43 to 47, wherein the at least one second access category is different from access categories corresponding to a non-zero power device.

50. The apparatus according to claim 49, wherein in a case where an enhanced distributed channel access (EDCA) parameter comprises an arbitration inter-frame space number (AIFSN), a first AIFSN is less than a second AIFSN, wherein, the first AIFSN is a maximum value in AIFSNs of the at least one second access category, and the second AIFSN is a minimum value in AIFSNs of the access categories corresponding to the non-zero power device.

51. The apparatus according to claim 49 or 50, wherein in a case where an enhanced distributed channel access (EDCA) parameter comprises a minimum contention window (CWₘᵢₙ), a first CWₘᵢₙ is greater than a second CWₘᵢₙ, wherein the first CWₘᵢₙ is a minimum value in CWsₘᵢₙ of the at least one second access category, and the second CWₘᵢₙ is a maximum value in CWsₘᵢₙ of the access categories corresponding to the non-zero power device.

52. The apparatus according to any one of claims 49 to 51, wherein in a case where an enhanced distributed channel access (EDCA) parameter comprises a maximum contention window (CWₘₐₓ), a first CWₘₐₓ is greater than a second CWₘₐₓ, wherein the first CWₘₐₓ is a minimum value in CWsₘₐₓ of the at least one second access category, and the second CWₘₐₓ is a maximum value in CWsₘₐₓ of the access categories corresponding to the non-zero power device.

53. The apparatus according to any one of claims 49 to 52, wherein in a case where an enhanced distributed channel access (EDCA) parameter comprises a transmission opportunity (TXOP) limit, a first TXOP limit is shorter than a second TXOP limit, wherein the first TXOP limit is a maximum value in TXOP limits of the at least one second access category, and the second TXOP limit is a minimum value in TXOP limits corresponding to the access categories of the non-zero power device.

54. The apparatus according to any one of claims 43 to 53, wherein the first access category is associated with at least one of following pieces of information of the station device: a type of the zero-power device, an energy harvesting scheme, an energy storage capacity, or an energy storage state.

55. A communication device, implemented as a first device, and comprising: a processor, a memory, and a transceiver; wherein the memory stores one or more computer programs, which when loaded and run by the processor, cause the communication device to perform the method for channel access as defined in any one of claims 1 to 27.

56. A computer-readable storage medium, storing one or more computer programs, wherein the one or more computer programs, when loaded and run by a processor, cause the processor to perform the method for channel access as defined in any one of claims 1 to 27.

57. A chip, when running in a communication device, causing the communication device to perform the method for channel access as defined in any one of claims 1 to 27.

58. A computer program product, comprising one or more computer instructions, wherein the one or more computer instructions are stored on a computer-readable storage medium; and a processor of a communication device reads the one or more computer instructions from the computer-readable storage medium and executes the one or more computer instructions to cause the communication device to perform the method for channel access as defined in any one of claims 1 to 27.

59. A computer program, when loaded and run by a processor of a communication device, causing the communication device to perform the method for channel access as defined in any one of claims 1 to 27.
